# EUROPÄISCHE PATENTSCHRIFT

(11) **EP 1 497 066 B1**
(45) Veröffentlichungstag und Bekanntmachung des Hinweises auf die Patenterteilung: **07.11.2007**
(21) Anmeldenummer: 03746279.3
(22) Anmeldetag: 26.03.2003
(51) Int. Cl.: B23D 15/12

(54) **GETRIEBEMITTEL FÜR EINE SCHNEIDEINRICHTUNG**
GEARING MEANS FOR A CUTTING DEVICE
MOYENS DE TRANSMISSION POUR UN DISPOSITIF DE COUPE

(30) Priorität: 12.04.2002 DE 10217026
(43) Veröffentlichungstag der Anmeldung: 19.01.2005
(73) Patentinhaber: IFUTEC Ingenieurbüro für Umformtechnik GmbH, 76307 Karlsbad (DE)
(72) Erfinder: BÖNING, Matthias, 72764 Reutlingen (DE)
(74) Vertreter: Kreiser, André Manfred
(86) Internationale Anmeldenummer: PCT/EP2003/003114
(87) Internationale Veröffentlichungsnummer: WO 2003/086691

(56) Entgegenhaltungen:
- EP-A- 0 005 453
- CH-A- 91 942
- DE-C- 512 995
- DE-C- 700 582
- FR-A- 504 081
- FR-A- 585 866
- FR-A- 959 271
- FR-A- 1 044 384
- FR-A- 1 083 817
- GB-A- 437 267
- GB-A- 1 423 723
- US-A- 3 408 888
- US-A- 3 898 902
- US-A- 4 337 679
- US-A- 5 195 415
- US-A- 5 375 307
- PATENT ABSTRACTS OF JAPAN vol. 1998, no. 10, 31. August 1998 (1998-08-31) -& JP 10 113816 A (SAKAI PIPE KOGYO:KK), 6. Mai 1998 (1998-05-06)

## Beschreibung

Die Erfindung betrifft eine Schneideinrichtung zum Schneiden eines Werkstücks mittels eines beweglichen Schneidelements, wobei das Schneidelement zur Ausführung einer Hubbewegung über Antriebsmittel von einem Antrieb antreibbar ist und die Antriebsmittel eine maximale Hubgeschwindigkeit V₁ erreichen.

Schnell laufende Stanz- und Schneidmaschinen sind üblicherweise als Exzenterpressen ausgeführt, mit denen Trenn-, Stanz-, Sinter- und Umformvorgänge von metallischen Teilen und Profilen durchgeführt werden. Beim Schneiden oder Stanzen von Blechbändern ist es Ziel, eine möglichst hohe Ausbringung von abgeschnittenen bzw. ausgestanzten Metallteilen zu erreichen. Dabei müssen die während des Schneid- bzw. Stanzvorgangs erzeugten Schnittflächen oft hohen Anforderungen bezüglich der Ebenheit bzw. der möglichst senkrechten Orientierung der Schnittflächen genügen.

Um einerseits dem Wunsch nach erhöhten Ausbringungsraten und andererseits den Anforderungen bezüglich der Schnittflächenqualität nachzukommen, muss eine möglichst hohe Schneidgeschwindigkeit erreicht werden. Wird die Schneidgeschwindigkeit auf Werte von ca. 2,5 m/sec. bis 3,5 m/sec. gesteigert, handelt es sich um einen sog. Hochgeschwindigkeits- Scherschneid-Vorgang, auch High-Speed-Impact-Cutting (HSIC) genannt. Die Besonderheit des HSIC-Verfahrens liegt darin, dass der Trenn- bzw. Stanzvorgang ohne nennenswerte Wärmeverluste einhergeht. Dabei wird die kinetische Energie eines Stanz- oder Schneidelements nahezu ohne Wärmeverlust (adiabatisch) in Umformenergie umgewandelt. Dies hat zur Folge, dass die abgetrennten Teile im Wesentlichen gratfrei sind und dass die Schnittflächen einen im Verhältnis zur Bruchfläche minimalen Glattschnittanteil aufweisen. Darüber hinaus ist die genannte Erhöhung der Schneidgeschwindigkeit Voraussetzung für maximale Ausbringungsraten.

Mit konventionellen Exzenterpressen können Werkzeuggeschwindigkeiten im Bereich von maximal ca. 1 m/sec. erreicht werden. Um die genannten, erwünschten Werkzeuggeschwindigkeiten von 2,5 m/sec. bis 3,5 m/sec. zu erreichen, müssen also zusätzliche Maßnahmen ergriffen werden.

Aus der DE 197 22 245 A1 ist eine Antriebseinrichtung für eine schnell laufende Stanz- und Schneidpresse bekannt. Mit dieser Antriebseinrichtung wird ein Stößel angetrieben, der einen Schneidstempel trägt, der durch einen Schlagvorgang Schnitt- bzw. Stanzteile von einem Blechband abtrennt. Der Stößel wird durch eine Antriebseinrichtung mit einer jeweils scheibenförmig ausgebildeten Kurbel und einer Koppel angetrieben, und weist während eines Teils seiner Hubbewegung eine gegenüber bei einem Antrieb mit konventioneller Lagerung erhöhte Geschwindigkeit auf.

Nachteilig bei dieser bekannten Lösung ist, dass die Stanz- bzw. Schneidmaschinen aufwändig modifiziert werden müssen. Dies kann einerseits aus bauraumtechnischen Gründen schwierig sein und erfordert andererseits einen hohen Zeitaufwand. Durch den hohen Umrüstaufwand wird ein schneller und flexibler Wechsel zwischen Schneid- oder Stanzvorgängen mit konventionellen Schneidgeschwindigkeiten und mit adiabatischen Schneidgeschwindigkeiten verhindert.

Aus der JP 10113816 A ist eine Schneideinrichtung mit den Merkmalen des Oberbegriffs des Anspruchs 1 bekannt.

Der vorliegenden Erfindung liegt deshalb die Aufgabe zugrunde, eine Schneideinrichtung bereitzustellen, mit der ohne aufwändige Modifikationen an den Stanz- und Schneidmaschinen eine hervorragende Schnittqualität bei gesteigerten Ausbringungsraten erreicht wird.

Die Aufgabe wird durch die Merkmale des Anspruchs 1 gelöst. Bei einer Schneideinrichtung der eingangs beschriebenen Art weisen die Antriebsmittel eine Hubplatte auf, die fest mit einem Pressenbär der Stanz- und Schneidmaschine verbindbar ist, wobei die Schneideinrichtung eine Trägerplatte aufweist, die fest mit einem Pressentisch der Stanz- und Schneidmaschine verbindbar ist.

Die Schneideinrichtung ist als Zusatzmodul zum Einbau in handelsübliche Stanz- und Schneidmaschinen vorgesehen. Die Schneideinrichtung kann als Zubehör bzw. Nachrüstteil für bereits im Einsatz befindliche Stanz- und Schneidmaschinen angeboten werden oder als Zusatzausstattung für neue Stanz- und Schneidmaschinen angeboten werden. Dabei müssen die Maschinen, insbesondere ihr Antrieb, nicht angepasst werden, um zwischen einem Einsatz mit normalen bzw. adiabatischen Schneidgeschwindigkeiten zu wechseln.

Die erfindungsgemäße Schneideinrichtung hat den wesentlichen Vorteil, dass hohe Schneid- bzw. Hubgeschwindigkeiten erreichbar sind, ohne dass die Stanz- oder Schneidmaschinen aufwändig angepasst werden müssen. Die Getriebemittel sind separat vorgesehen und bewirken, dass die von den Antriebsmitteln vorgegebene maximale Hubgeschwindigkeit V₁ auf eine maximale Hubgeschwindigkeit V₂ erhöht werden kann. Vorteilhafterweise liegt die Hubgeschwindigkeit V₂ im Bereich von 2,5 bis 3,5 m/sec. Mit Vorzug ist die erfindungsgemäße Schneideinrichtung problemlos in schnell laufende Stanz- oder Schneidmaschinen einbaubar.

Bei Ausführung der Antriebsmittel als konventioneller Kurbeltrieb wird in dessen 90°-Stellung, d.h. genau zwischen der OT- bzw. UT-Stellung, eine maximale Hubgeschwindigkeit V₁ erreicht. Diese Hubgeschwindigkeit V₁ wird erfindungsgemäß über Getriebemittel auf eine maximale Hubgeschwindigkeit V₂ > V₁ gesteigert.

Die Trägerplatte dient der Befestigung von Elementen der Schneideinrichtung, wie beispielsweise einer feststehenden Matrize zur Aufnahme eines Werkstücks oder des oben beschriebenen Anschlags. Die Matrize und der Anschlag können lösbar auf der Trägerplatte befestigt werden, wodurch ein modularer Aufbau gewährleistet ist, um verschiedene Blechprofile bearbeiten zu können. Die Trägerplatte kann extern für seinen Einsatz in der Stanz- oder Schneidmaschine vorbereitet werden und anschließend auf den Pressentisch der Maschine gelegt und mit diesem beispielsweise über Klemmen verbunden werden.

Die Antriebsmittel weisen eine Hubplatte auf. An dieser können ein oder mehrere Stößel und das Rückholelement befestigt werden. Vorzugsweise ist die Befestigungslage des Stößels oder der Stößel auf der Hubplatte einstellbar, so dass gewünschte Übersetzungsverhältnisse der Hubgeschwindigkeit V₂ zur Hubgeschwindigkeit V₁ erzeugt werden können. Neben der oben beschriebenen Trägerplatte kann auch die Hubplatte außerhalb der Schneid- oder Stanzmaschine für ihren Einsatz vorbereitet werden. Anschließend kann die Hubplatte beispielsweise über Klemmmittel mit dem Pressenbär verbunden werden.

Besonders vorteilhafte Weiterbildungen der Erfindung sind in Unteransprüchen angegeben.

Nach einer vorteilhaften Weiterbildung der Erfindung umfassen die Getriebemittel einen Schlaghebel. Ferner ist es vorteilhaft, dass die Getriebemittel einen Stößel zum Antrieb des Schlaghebels aufweisen. Durch die Anordnung von Schlaghebel und einem oder mehreren Stößeln kann auf besonders einfache Art und Weise ein Hebelprinzip verwirklicht werden. Bei einem Schneidvorgang wird der Stößel entsprechend der Geschwindigkeit der Antriebsmittel mit einer Geschwindigkeit V₁ bewegt. Der Stößel drückt auf einen Bereich des Schlaghebels, wobei Stößel und Schlaghebel nicht starr miteinander verbunden sind, so dass der Schlaghebel in vom Stößel beabstandeten Bereichen gegenüber der Hubgeschwindigkeit V₁ erhöhte Geschwindigkeiten aufweist. Insbesondere der Bereich des Schlaghebels, mit dem ein Schlagkontakt auf ein Schneidelement erfolgt, weist eine gegenüber der Hubgeschwindigkeit V₁ erhöhte Hubgeschwindigkeit V₂ auf. Durch Änderung der Relativlage von Schlaghebel und Stößel kann das Übersetzungsverhältnis eingestellt werden, mit der die Geschwindigkeit V₁ auf die Geschwindigkeit V₂ erhöht wird.

Vorteilhafterweise weist der Stößel ein Federelement auf. Das Federelement ist besonders starr ausgebildet. Dies bedeutet, dass die Federkonstante derart hoch ist, dass eine Druckübertragung von den Antriebsmitteln über den Stößel auf den Schlaghebel möglich ist und die zum Schneiden bzw. Stanzen benötigte kinetische Energie auf den Schlaghebel übertragen werden kann. Durch die Feder ist es jedoch möglich, die Bewegung des Schlaghebels ab einer der 90°-Stellung eines Kurbelantriebs entsprechenden Lage anzuhalten und gleichzeitig den Durchtrieb des Kurbeltriebs aus der 90°-Lage über die 180°-Lage und wieder in Richtung Rückhub zu gewährleisten. Bei starrer Ausführung des Stößels müsste für diese Bewegungsphasen des Kurbeltriebs ein Durchschwingen des Schlaghebels gewährleistet sein, was jedoch aus fertigungstechnischer Sicht nicht notwendig ist, da der eigentliche Schneid- bzw. Stanzvorgang bereits in einer Kurbeltriebslage von 90° zuzüglich eines geringen Winkelzuschlags erfolgt. Durch die Ausführung des Stößels als Federelement ist darüber hinaus ein Ausgleich von Relätivbewegungen von Schlaghebel bzw. Antriebsmitteln in einer zur Hubrichtung senkrechten Ebene möglich.

In Ausgestaltung der Erfindung weist der Schlaghebel einen beidseitig überstehenden Querbolzen auf. Der Querbolzen kann beispielsweise dazu dienen, dass der Stößel zur Erzeugung einer auf das Werkstück gerichteten Bewegung des Schlaghebels auf den überstehenden Teil des Querbolzens drückt. Insbesondere bei Anordnung von zwei seitlich vom Schlaghebel angeordneten Stößeln, die auf jeweils freie Enden des Querbolzens drücken, ist eine kippsichere und gleichmäßige Krafteinleitung von den Antriebsmitteln über die Stößel in den Schlaghebel möglich.

In Ausgestaltung der Erfindung ist ein Anschlag für den Schlaghebel oder für den Querbolzen vorgesehen. Durch den Anschlag kann die Bewegung des Schlaghebels begrenzt werden, womit ein Durchschwingen des Schlaghebels in bestimmten Lagen der Antriebsmittel verhindert wird. Der Anschlag bewirkt, dass der Schlaghebel zu Beginn des Schneid- bzw. Stanzvorgangs seine kinetische Energie beispielsweise auf einen Schneidstempel übertragen kann und danach durch Kontakt des Schlaghebels mit dem Anschlag abgestoppt wird, so dass ein weiteres Durchschwingen des Schlaghebels verhindert wird.

Eine Weiterbildung sieht vor, dass der Anschlag elastisch nachgiebig ist oder eine elastisch nachgiebige Anschlagfläche aufweist. Es kann auch der Schlaghebel elastisch durchbiegbar bzw. verformbar sein. Dadurch wird der Schlagimpuls auf das Schneidwerkzeug dergestalt übertragen, dass der Hebelarm durch den Anschlag bereits kurz vor dem Auftreffen auf das eigentliche Schneidwerkzeug abgefangen wird. Hierdurch wird für den Restweg entweder die Eigenelastizität des Schlagarmes genutzt oder eine in den Anschlag integrierte Einrichtung genutzt wird. Dadurch wird erreicht, dass der Schlagimpuls in sehr kurzer Zeit auf das Werkstück einwirkt und ein nahezu vollständiger Energieübertrag mit hohem Wirkungsgrad erfolgt.

Eine Weiterbildung der Erfindung sieht vor, dass ein Rückholelement zur Erzeugung einer vom Werkstück weg gerichteten Bewegung des Schlaghebels vorgesehen ist. Durch ein solches Rückholelement kann der Schlaghebel zur Vorbereitung eines Folgehubs aus einer Schneid- bzw.

Stanzstellung in seine Ruhe- oder Ausgangsstellung gebracht werden. Aus dieser Stellung kann der Schlaghebel durch die oben genannten Stößel wieder auf die Hubgeschwindigkeit V₂ beschleunigt werden.

Nach einer vorteilhaften Ausgestaltung der Erfindung weist das Rückholelement ein Langloch auf, welches vom Querbolzen durchgriffen ist. Das Langloch ermöglicht, dass bei Anlage des Querbolzens in einer Endlage im Langloch der Schlaghebel bewegt werden kann. Außerdem sind während der Hubbewegung der Antriebsmittel in Kurbelstellungen zwischen 90° und 270° das Rückholelement und der Schlaghebel voneinander entkoppelt. Hierdurch wird ein Durchschwingen der Antriebsmittel im Anschluss an den Schneid- bzw. Stanzvorgang ermöglicht, wobei der Schlaghebel auf dem oben beschriebenen Anschlag zur Auflage kommen kann.

Vorteilhafterweise ist der Schlaghebel an der Trägerplatte oder an mit der Trägerplatte zumindest mittelbar verbundenen Halteelementen schwenkbar angelenkt. Dieses Schwenklager kann durch einen Gelenkbolzen gebildet sein und dient der Lagedefinition des Schlaghebels. Der Schlaghebel kann beispielsweise mittels eines Gelenkbolzens direkt an der Trägerplatte oder an Halteelementen befestigt werden, die auf der Trägerplatte vorgesehen sind. Ein solches Halteelement kann beispielsweise durch einen Lagerbock gebildet sein.

Mit Vorzug ist der Stößel bezogen auf die Längserstreckung des Schlaghebels zwischen dessen Anlenkung und dem Schneidelement angeordnet. Je weiter dabei der Stößel vom Schneidelement entfernt ist, desto höher ist die erreichbare Hubgeschwindigkeit des dem Schneidelement zugeordneten Bereichs des Schlaghebels. Der Antrieb des Schlaghebels kann auch in einem außerhalb des Abschnitts zwischen Anlenkung und Schneidelement befindlichen Abschnitt erfolgen. Hierdurch wird eine Umkehrung der Hubrichtung erzeugt.

Eine Ausgestaltung der Erfindung sieht vor, dass die Hubplatte relativ zur Trägerplatte bewegbar und über Führungsmittel geführt ist. Durch die Führungsmittel, die beispielsweise in Form von Säulen bereitgestellt werden können, ist ein präziser Antrieb des Schlaghebels gewährleistet. Hierdurch kann eine gleichbleibend hohe Schnittflächenqualität erzeugt werden.

Vorteilhafterweise weisen die Antriebsmittel einen Kurbeltrieb auf. Ein solcher Kurbeltrieb ist in handelsüblichen Stanz- und Schneidmaschinen vorhanden und hat sich als zuverlässig erwiesen. Bei einem solchen Kurbeltrieb wird eine maximale Hubgeschwindigkeit V₁ bei einer Kurbelstellung von 90° erreicht.

Es ist ferner vorteilhaft, dass eine Vorschubvorrichtung zum Nachführen des Werkstücks vorgesehen ist. Eine solche Vorschubvorrichtung wird mit dem Antrieb zur Erzeugung der Hubbewegung der Schneid- oder Stanzmaschine synchronisiert, so dass das Werkstück zwischen zwei Schlaghüben um genau eine Produktlänge nachgeführt wird.

Es besteht die Möglichkeit, dass der Antrieb ein elektrischer, hydraulischer, pneumatischer, pyrotechnischer oder magnetischer Antrieb ist. Dadurch ist die erfindungsgemäße Schneideinrichtung universell einsetzbar.

Bei einem Ausführungsbeispiel ist vorgesehen, dass der Antrieb einen Energiespeicher aufweist. Der Energiespeicher ist vom Antrieb vorspannbar oder aufladbar, und die gespeicherte Energie ist schlagartig an die Antriebsmittel abgebbar. Dabei weist der Antrieb z.B. eine Feder oder einen Gasdruckspeicher auf. Die für die Funktion der Einrichtung notwendige Schlagenergie und die Schlaggeschwindigkeit kann auch dann gewährleistet werden, wenn der eigentliche Antrieb diese Geschwindigkeit nicht aufweist. Hierfür wird die Energie z.B. in einem federnden Element gespeichert, indem dieses vorgespannt wird. Durch Lösen eines Klink- oder Rastmechanismus wird diese gespeicherte Energie in sehr kurzer Zeit freigegeben und weist dann die erforderliche Parameter auf. Der Federspeicher kann sowohl eine mechanische Feder sein (aus Draht oder ein Federblech) oder mit einem gasförmigen oder flüssigen Medium betrieben werden.

Um Maschinen schnell aus- bzw. umrüsten zu können, ist die erfindungsgemäße Schneideinrichtung als Schnellwechselkassette ausgebildet.

Die Anpassbarkeit der erfindungsgemäßen Schneideinrichtung an unterschiedliche Werkstücke oder deren Größen wird dadurch erzielt, dass die Schlagenergie z.B. durch Hebellängenveränderung, durch Verschieben von Massen und/oder durch unterschiedliche Vorspannung von Federelementen einstellbar ist. Ferner kann die Schlagenergie stufenlos oder in Stufen einstellbar sein.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: eine schematische Seitenansicht einer durch einen externen Kurbeltrieb einer Stanz- oder Schneidmaschine angetriebenen Schneideinrichtung in einer Ausgangsstellung;
- Figur 2: das Detail II des Schneidelements gemäß Figur 1;
- Figur 3: eine schematische Seitenansicht der Schneideinrichtung gemäß Figur 1 in einer Schneidstellung;
- Figur 4: eine schematische Seitenansicht der Schneideinrichtung gemäß Figur 1 in einer Durchschwingstellung;
- Figur 5: eine perspektivische Ansicht eines Ausführungsbeispiels der Schneideinrichtung;
- Figur 6: eine schematische Seitenansicht der Schneideinrichtung mit elastischem Anschlag;
- Figur 7: eine schematische Seitenansicht der Schneideinrichtung mit elastischem Schlagarm; und
- Figur 8: eine schematische Seitenansicht der Schneideinrichtung mit einem Antrieb mit Federspeicher.

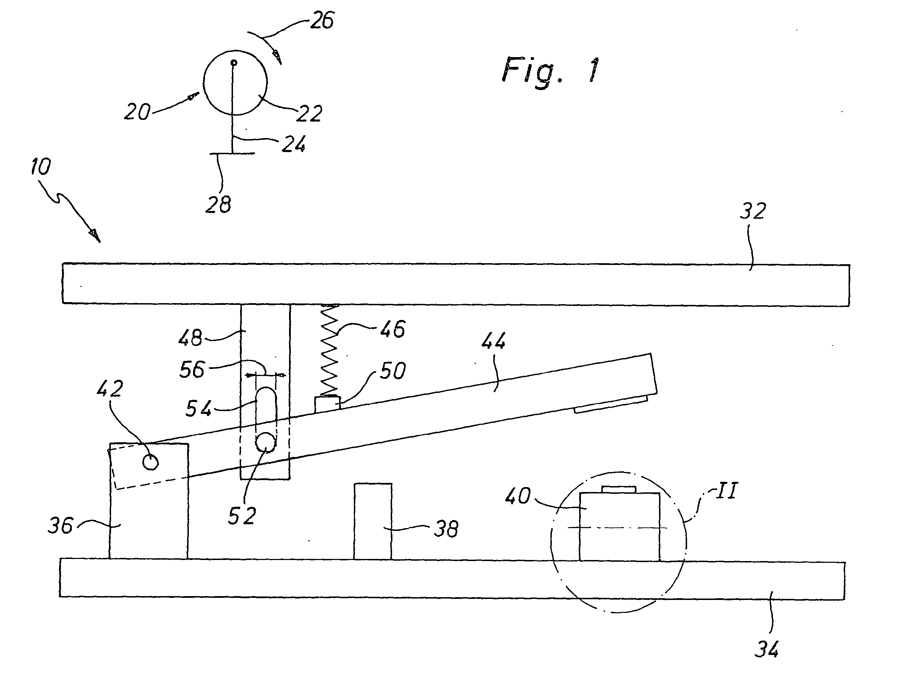

Die Fig. 1 zeigt eine insgesamt mit dem Bezugszeichen 10 bezeichnete Schneideinrichtung, die von einem symbolisch dargestellten Kurbeltrieb 20 angetrieben wird. Der Kurbeltrieb 20 besteht aus einer Antriebsscheibe 22, die über nicht weiter dargestellte Mittel angetrieben wird, und einer exzentrisch zum Mittelpunkt der Antriebsscheibe 22 angelenkten Koppel 24. Die Antriebsscheibe 22 wird in Drehrichtung 26 im Uhrzeigersinn angetrieben. Die Koppel 24 ist, symbolisch dargestellt, mit dem Pressenbär 28 einer nicht dargestellten Stanz- oder Schneidmaschine verbunden.

Die Schneideinrichtung 10 weist zwei zueinander im Wesentlichen parallele Platten auf. Die in Fig. 1 oben dargestellte Platte, die Hubplatte, trägt das Bezugszeichen 32 und ist über nicht weiter dargestellte Mittel fest mit dem vom Kurbeltrieb 20 angetriebenen Pressenbär 28 verbunden. Die in Fig. 1 untere Platte, die Trägerplatte, trägt das Bezugszeichen 34 und ist fest mit dem nicht dargestellten Pressentisch der Stanz- oder Schneidmaschine verbunden.

Auf der Trägerplatte 34 sind die folgenden Elemente befestigt: Ein Lagerbock 36, ein Anschlag 38 sowie eine Matrize 40. Der Lagerbock 36 weist eine Öffnung auf, in die ein Gelenkbolzen 42 eingesetzt ist. Der Gelenkbolzen 42 bildet ein Schwenklager für einen um den Gelenkbolzen 42 schwenkbaren Schlaghebel 44. Der Schlaghebel 44 ist in Fig. 1 in einer Ausgangsstellung dargestellt, die der 0°-Stellung des Kurbeltriebs 20 entspricht.

An der Hubplatte 32 ist ein Stößel 46 sowie ein Rückholelement 48 befestigt. Der Stößel 46 ist als Feder mit einer sehr hohen Federkonstante ausgeführt und über ein symbolisch dargestelltes Gelenk 50 mit dem Schlaghebel 44 verbunden. Der Schlaghebel 44 wird durch den Kurbeltrieb 20, über die Bewegung des Pressenbärs 28 und der Hubplatte 32, sowie über die Bewegung des Stößels 46 und des Gelenks 50 angetrieben, d.h. um den Gelenkbolzen 42 herum verschwenkt. Der Schlaghebel 44 weist einen Querbolzen 52 auf, der sich durch den Schlaghebel 44 hindurch erstreckt. Das freie Ende des Querbolzens 52 greift in ein Langloch 54 eines an der Hubplatte 32 befestigten Rückholelements 48. Das Langloch 54 erstreckt sich in einer zur Ebene der Hubplatte 32 senkrechten Richtung. Es weist eine Quererstreckung 56 auf, die geringfügig größer ist als der Durchmesser des Querbolzens 52.

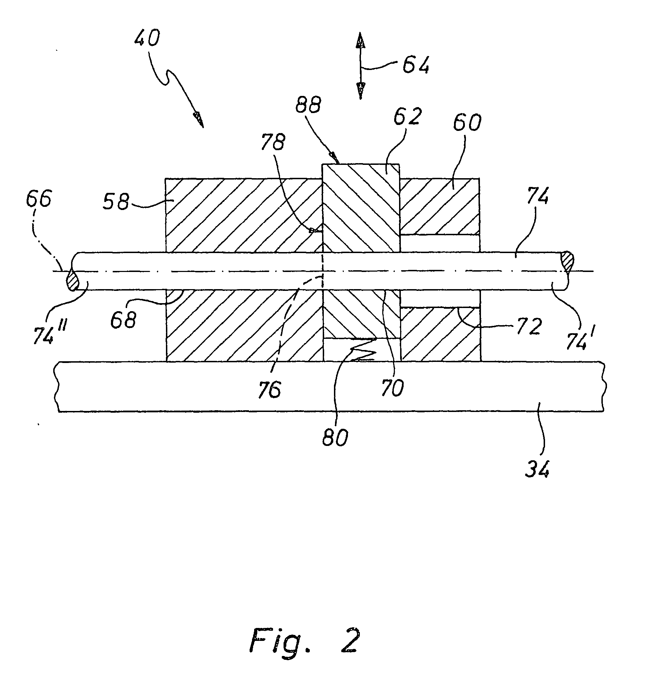

Unter Bezugnahme auf die Fig. 2 wird das Detail II gemäß Fig. 1 bzw. die Matrize 40 näher beschrieben. Die in Fig. 2 insgesamt mit dem Bezugszeichen 40 bezeichnete Matrize ist über nicht dargestellte Mittel fest mit der Trägerplatte 34 der Schneideinrichtung 10 verbunden. Die Matrize 40 besteht aus einem ortsfesten Matrizeneingang 58 und einem ortsfesten Matrizenausgang 60. Die Matrize 40 weist ferner einen Schneidstempel 62 auf, der zwischen dem Matrizeneingang 58 und dem Matrizenausgang 60 angeordnet ist und für mit Bezugszeichen 64 bezeichnete Hub- bzw. Rückhubbewegungen geeignet ist. Der Matrizeneingang 58, der Schneidstempel 62 sowie der Matrizenausgang 60 weisen koaxial zu einer gemeinsamen Achse 66 angeordnete Öffnungen 68, 70 bzw. 72 auf. Das zu bearbeitende Werkstück 74 weist die genannte Mittelachse 66 auf und ist in der Öffnung 68 des Matrizeneingangs 58 sowie in der Öffnung 70 des Schneidstempels 62 mit einer Spielpassung geführt. Die Öffnung 72 des Matrizenausgangs 60 weist einen größeren Durchmesser auf als das Werkstück 74.

In Fig. 2 ist eine gestrichelt dargestellte, senkrecht zur Achse 66 verlaufende Schnittebene 76 erkennbar, entlang der ein Schnittteil 74' von einem Werkstückvorrat 74'' abgetrennt werden kann. Der Trenn- oder Schneidvorgang wird ausgelöst durch eine Hubbewegung des Schneidstempels 62 aus der in Fig. 2 dargestellten Lage in Richtung auf die Trägerplatte 34. Eine solche Bewegung wird, wie weiter unten dargestellt, durch den Aufprall des in Fig. 1 dargestellten Schlaghebels 44 auf den Schneidstempel 62 erzeugt. Bei einer solchen Hubbewegung des Schneidstempels 62 wirkt die Kante 78 als Schneidkante. Der Schneidstempel 62 kann im Anschluss eines im Folgenden dargestellten Schneidvorgangs aus seiner Arbeitslage in die dargestellte Ruhelage mittels eines Rückstellelements in Form einer Feder 80 gebracht werden.

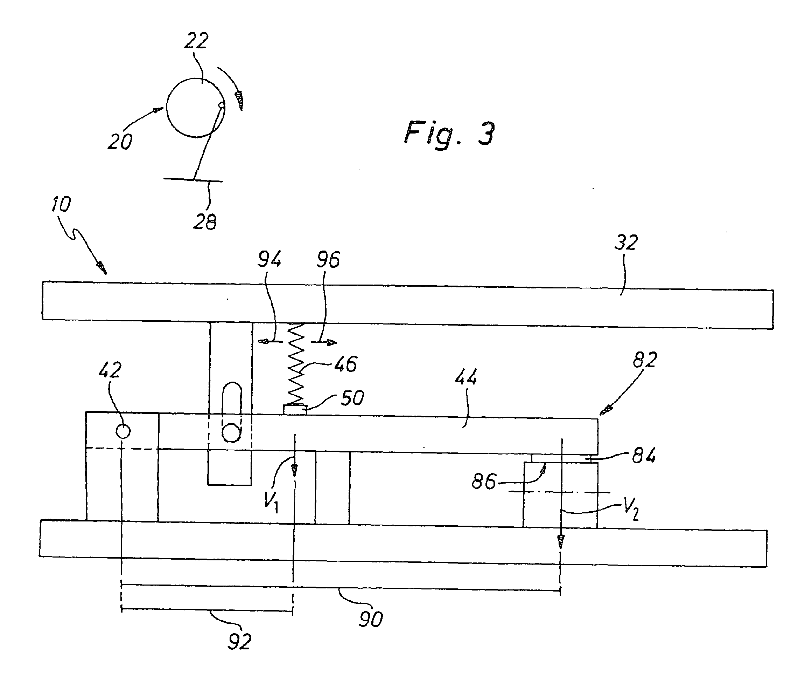

Mit Bezug auf Fig. 3 wird der Schneidvorgang beschrieben, der im Wesentlichen in der 90°-Stellung des Kurbeltriebs 20 bzw. der Antriebsscheibe 22 erfolgt. In dieser Lage des Kurbeltriebs 20 befindet sich die vom Pressenbär 28 angetriebene Hubplatte 32 in einer gegenüber der in Fig. 1 dargestellten Lage tieferen Lage. Über den Stößel 46 und das Gelenk 50 erfolgt eine Bewegungs- und Kraftübertragung auf den Schlagstempel 44. Der Schlagstempel 44 weist an seinem vom Gelenkbolzen 42 entfernten Ende 82 einen Aufschlagbereich 84 auf. Der Aufschlagbereich 84 trifft mit seiner Aufschlagfläche 86 auf eine Schlagfläche 88 des Schneidstempels 62 (s. Fig. 2). Der Aufprall der Aufschlagfläche 86 auf die Schlagfläche 88 bewirkt ein Eintauchen des Schneidstempels 62 zwischen dem Matrizeneingang 58 und dem Matrizenausgang 60. Die Geschwindigkeit, mit der der Aufschlagbereich 84 auf den Schneidstempel 62 prallt, ist in Fig. 3 mit V₂ bezeichnet.

Die Geschwindigkeit V₂ ist gegenüber der Geschwindigkeit V₁ des Stößels 46 erhöht, die durch die Bewegung des Kurbeltriebs 20 bzw. des Pressenbärs 28, der Hubplatte 32 sowie des Stößels 46 vorgegeben ist. Das Geschwindigkeitsverhältnis V₂ zu V₁ entspricht dem in Fig. 3 dargestellten Verhältnis aus dem Abstand 90 zwischen Gelenkbolzen 42 und Zentrum des Aufschlagbereichs 84 zum Abstand 92 zwischen dem Gelenkbolzen 42 und der Lage des Stößels 46. Durch Änderung der Lage des Stößels 46 können weitere Übersetzungsverhältnisse eingestellt werden. Bei Verlagerung in Richtung 94 wird das Verhältnis von V₂ zu V₁ erhöht, bei Verlagerung des Stößels 46 in Richtung 96 wird das Übersetzungsverhältnis von V₂ zu V₁ verkleinert.

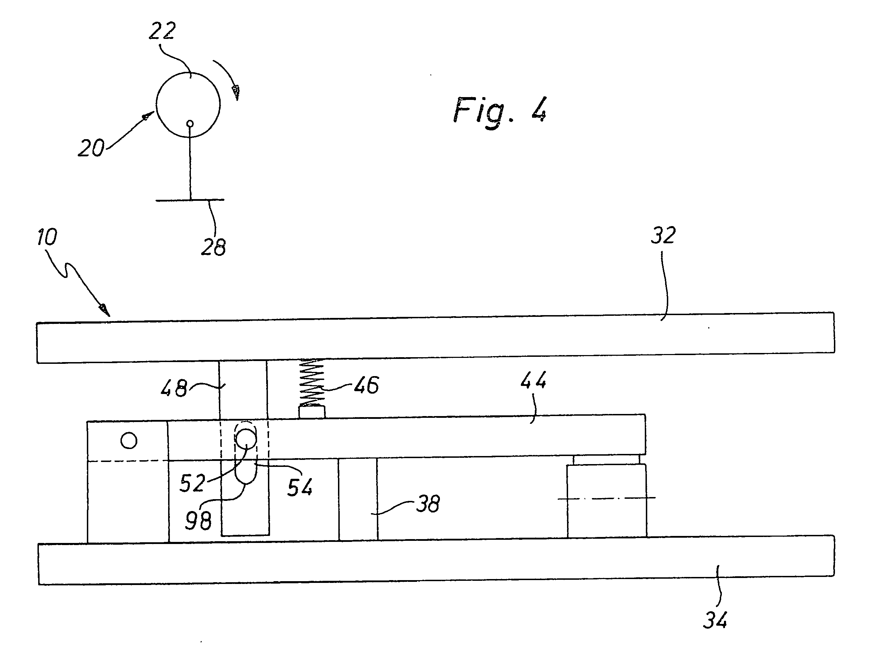

Mit Bezug auf Fig. 4 wird die Lage der Schneideinrichtung 10 beschrieben, die diese in der 180°-Stellung des Kurbeltriebs 20 bzw. der Antriebsscheibe 22 einnimmt. Die vom Pressenbär 28 angetriebene Hubplatte 32 befindet sich gegenüber der in Fig. 3 dargestellten Lage näher an der Trägerplatte 34, und zwar in der unteren Arbeitslage. Der Schlaghebel 44 liegt auf dem Anschlag 38 auf und ist von der Bewegung der Hubplatte 32 durch die Kompression des Federstößels 46 entkoppelt. Das fest mit der Hubplatte 32 verbundene Rückholelement 48 kann sich zusammen mit der Hubplatte 32 nach unten bewegen, da der Querbolzen 52 in dem Langloch 54 des Rückholelements 48 geführt ist. Durch die Ausführung des Stößels 46 als Feder ist gewährleistet, dass die Hubplatte 32 und das Rückholelement 48 trotz der unmittelbar ab der 90°-Stellung des Kurbeltriebs 20 eingenommenen Endlage des Schlaghebels 44 weiter durchschwingen können.

Der Schlaghebel 44 kann aus der in Fig. 4 dargestellten Lage in die in Fig. 1 dargestellte Ausgangsstellung zurückbewegt werden. Nach Einsetzen des Rückhubs des Pressenbärs 28 (ab Kurbeltriebstellung 180°) und damit der Hubplatte 32 bzw. des Rückholelements 48 kommt der Querbolzen 52 in einem Anlagebereich 98 des Langlochs 54 zur Anlage (unmittelbar vor Kurbeltriebstellung 270°). Somit wird Schlaghebel 44 bei weiterer Bewegung des Kurbeltriebs 20 in die in Fig. 1 dargestellte Ausgangsstellung zurückgehoben.

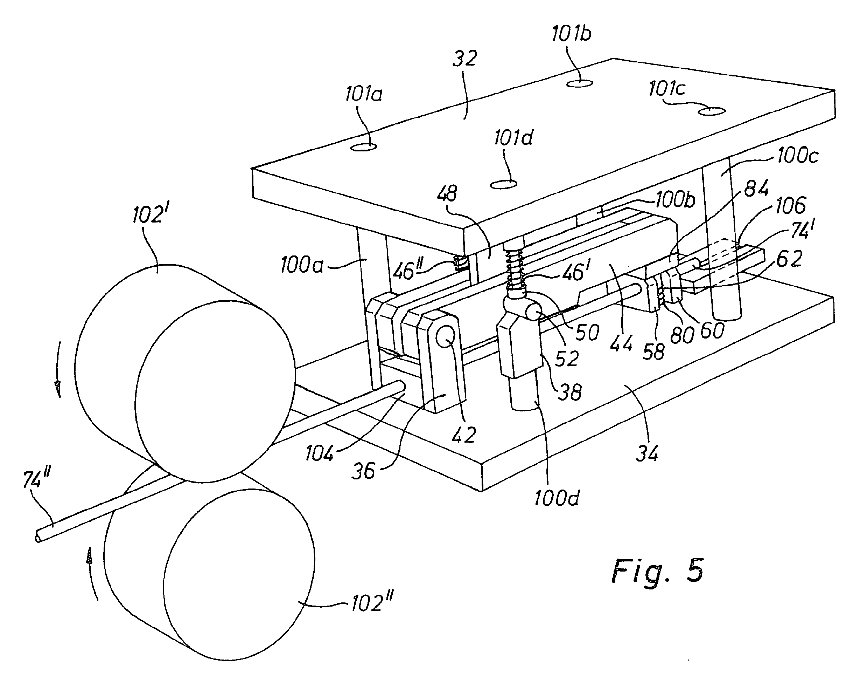

Fig. 5 zeigt eine perspektivische Ansicht eines Ausführungsbeispiels einer Schneideinrichtung. Diese umfasst eine obere Hubplatte 32, die fest mit dem Pressenbär einer nicht dargestellten Stanz- oder Schneidmaschine verbunden ist. Die Schneideinrichtung umfasst außerdem eine zur Hubplatte 32 parallele Trägerplatte 34, die fest mit dem Pressentisch einer nicht dargestellten Stanz- oder Schneidmaschine verbunden ist. An der Trägerplatte 34 sind vier senkrecht nach oben abstehende Säulen 100a-d befestigt. Die zur Trägerplatte 34 parallele Hubplatte 32 weist zylindrische Öffnungen 101a-d auf, in denen die Säulen 100a-d gleitend geführt sind. Durch die Säulenanordnung wird eine hohe Steifigkeit der Schneideinrichtung und eine exakte Führung der Hubplatte 32 gewährleistet.

Zwischen Trägerplatte 34 und Hubplatte 32 sind teilweise bereits in den Fig. 1 bis 4 beschriebene Elemente angeordnet. So ist ein Lagerbock 36 erkennbar, in den ein Gelenkbolzen 42 eingesetzt ist, der als Schwenklager für einen Schlaghebel 44 dient. Weiterhin ist ein Anschlag 38 auf der Trägerplatte 34 vorgesehen, auf dem in der in Fig. 5 dargestellten Lage des Schlaghebels 44 ein in diesen eingesetzter Querbolzen 52 aufliegt.

Der Schlaghebel 44 weist einen Aufschlagbereich 84 auf, der in dessen Arbeitslage auf einen Schlagstempel 62 trifft, der parallel zur Erstreckungsrichtung der Führungssäulen 100a-d verschiebbar zwischen einem ortsfesten Matrizeneingang 58 und einem ortsfesten Matrizenausgang 60 angeordnet ist. Unterhalb des Schlagstempels 62 ist das auch in Fig. 2 dargestellte Federelement 80 erkennbar.

Der Schlaghebel 44 wird durch zwei Federstößel 46' bzw. 46" unter Zwischenlage von Gelenken 50 angetrieben, indem die mit der Hubplatte 32 fest verbundenen Federstößel 46', 46" auf die seitlich aus dem Schlaghebel hervorstehenden freien Enden des Querbolzens 52 drücken. Hierdurch erfolgt die Kraft- und Bewegungsübertragung vom nicht dargestellten Antrieb der Schneid- oder Stanzmaschine über deren Pressenbär auf die Hubplatte 32, die Federstößel 46', 46'', den Querbolzen 52 und schließlich auf den Schlaghebel 44.

Der Schlaghebel 44 kann aus seiner in der Fig. 5 dargestellten Arbeitslage in eine der Darstellung in Fig. 1 entsprechende Ruhe- bzw. Ausgangslage gehoben werden. Hierfür ist ein Rückholelement 48 vorgesehen, das über Anlage eines Randbereichs eines in Fig. 5 nicht dargestellten Langlochs an einem mittigen Bereich des Querbolzens 52 den Schlaghebel 44 aus der in Fig. 5 dargestellten Arbeitslage in eine Ruhelage hebt.

Gemäß dem Ausführungsbeispiel in Fig. 5 ist eine der Schneideinrichtung vorgeschaltete Vorschubeinrichtung zum Nachführen des Werkstückvorrats 74" vorgesehen. Diese besteht aus zwei mit gegensätzlichen Drehrichtungen rotierenden Vorschubwalzen 102' und 102''. Die Walzen 102', 102" werden von einem nicht dargestellten Motor angetrieben, der mit dem Antrieb der Stanz- und Schneidmaschine synchronisiert wird, damit pro Schneid- oder Stanzvorgang genau eine Werkstücklänge des Werkstückvorrats 74'' nachgeführt wird.

Der Werkstückvorrat 74'' wird durch ein im Lagerbock 36 angeordnetes Führungselement 104 dem Matrizeneingang 58 und dem Schneidstempel 62 zugeführt. Nach Abschluss des Schneidvorgangs nach Aufprall des Schlaghebels 44 bzw. des Aufschlagbereichs 84 auf den Schneidstempel 62 wird der Schlaghebel 44 wieder in seine Ruhe- bzw. Ausgangsstellung zurückbewegt, so dass der Aufschlagbereich 84 und der Schneidstempel 62 wieder voneinander beabstandet sind. Die Rückstellfeder 80 bewegt dann den Schneidstempel 62 zurück in die in Fig. 2 dargestellte Lage, so dass der Werkstückvorrat 74" mit Hilfe der Vorschubeinrichtung 102 nachgeführt werden kann und das zuvor abgetrennte Schnittteil 74' durch den nachgeführten Werkstückvorrat 74'' durch den Matrizenausgang 60 hindurch geschoben wird. Das Schnittteil 74' kann abschließend von einer dem Matrizenausgang 60 nachgeschalteten Werkstückauflage 106 entfernt bzw. einem nicht dargestellten Schnittteilvorrat zugeführt werden.

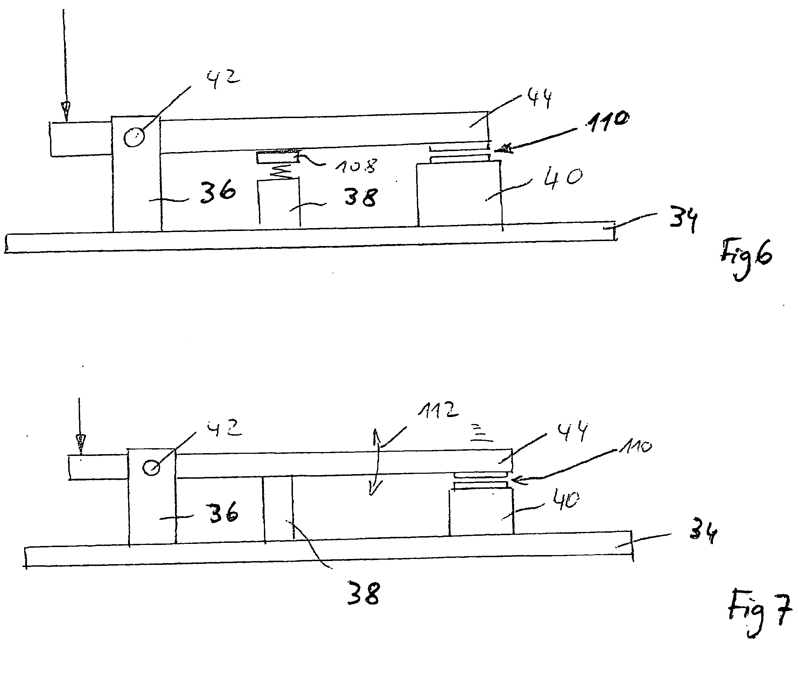

Die Figur 6 zeigt eine schematische Darstellung der Schneideinrichtung 10 mit elastischem Anschlag 38. Dabei kann der Anschlag 38 in sich elastisch ausgeführt sein oder er kann, wie in der Zeichnung dargestellt, mit einer elastisch nachgiebigen Anschlagfläche 108 versehen sein. Deutlich erkenn sie auch, dass in der Ruhelage des Schlaghebels 44 ein geringer Spalt 110 zwischen dem freien Ende des Schlaghebels 44 und der Matrize 40 existiert.

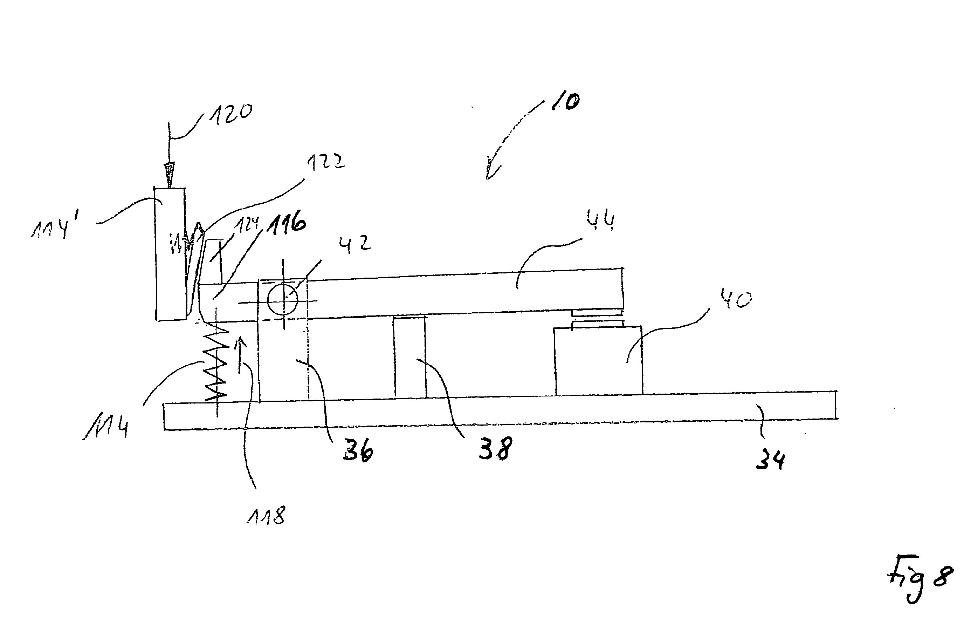

Die Figur 7 zeigt eine schematische Darstellung der Schneideinrichtung 10 mit elastischem Schlagarm 44, der in Richtung des Doppelpfeils 112 so weit durchschwingt, dass er den Spalt 110 schließt und an der Matrize 40 anschlägt.

Die Figur 8 zeigt eine schematische Darstellung der Schneideinrichtung 10 mit einem Antrieb mit Federspeicher 114, der unter dem Ende 116 des Schlaghebels 44 angeordnet ist. Der Federspeicher 114 wird aufgeladen und schlagartig in Richtung des Pfeils 118 entspannt. Auf diese Weise ist sichergestellt, dass die nötige Energie bereit gestellt wird und dass die Energieabgabe schnell erfolgt.

In Figur 8 ist außerdem eine zweite Variante eines Energiespeichers 114' dargestellt, der axial hinter dem Schlaghebel 44 angeordnet ist und der z.B. von einer in Richtung des Pfeils 120 wirkenden Kraft aufladbar ist. Die Energieabgabe erfolgt durch Ausschwenken eines Hebels 122, der auf einen Ansatz 124 am freien Ende 116 des Schlaghebels 44 schlägt. Sowohl der Energiespeicher 114 als auch 114' kann mit einer kleinen Kraft und langsam aufgeladen werden. Die Energieabgabe erfolgt aber schlagartig, so dass die Matrize 40 mit dem Schlaghebel 44 mit einer Geschwindigkeit von > 4 m/s beaufschlagt wird.

## Patentansprüche

1. Schneideinrichtung (10) zum Schneiden eines Werkstücks (74) mittels eines beweglichen Schneidelements (62), wobei das Schneidelement (62) zur Ausführung einer Hubbewegung über Antriebsmittel (20, 22, 24, 28, 32) von einem Antrieb antreibbar ist und die Antriebsmittel (20, 22, 24, 28, 32) eine maximale Hubgeschwindigkeit v₁ erreichen, wobei Getriebemittel (44, 46) vorgesehen sind, über die das Schneidelement (62) mit einer maximalen Hubgeschwindigkeit v₂>v₁ bewegbar ist, wobei die Schneideinrichtung (10) als Zusatzmodul zum Einbau in handelsübliche Stanz- und Schneidmaschinen vorgesehen ist, **dadurch gekennzeichnet, dass** die Antriebsmittel (20, 22, 24, 28, 32) eine Hubplatte (32) aufweisen, die fest mit einem Pressenbär (28) der Stanz- und Schneidmaschine verbindbar ist, wobei die Schneideinrichtung (10) eine Trägerplatte (34) aufweist, die fest mit einem Pressentisch der Stanz- und Schneidmaschine verbindbar ist.

2. Schneideinrichtung (10) nach Anspruch 1, **dadurch gekennzeichnet, dass** die Getriebemittel (44, 46) einen Schlaghebel (44) umfassen.

3. Schneideinrichtung (10) nach einem der vorhergehenden Ansprüche, **dadurch gekennzeichnet, dass** die Getriebemittel (44, 46) einen Stößel (46) zum Antrieb des Schlaghebels (44) aufweisen.

4. Schneideinrichtung (10) nach Anspruch 3, **dadurch gekennzeichnet, dass** der Stößel (46) ein Federelement aufweist.

5. Schneideinrichtung (10) nach Anspruch 3 oder 4, **dadurch gekennzeichnet, dass** der Schlaghebel (44) einen beidseitig überstehenden Querbolzen (52) aufweist.

6. Schneideinrichtung (10) nach Anspruch 5, **dadurch gekennzeichnet, dass** der Stößel (46) zur Erzeugung einer auf das Werkstück (74) gerichteten Bewegung des Schlaghebels (44) auf den Querbolzen (52) drückt.

7. Schneideinrichtung (10) nach einem der Ansprüche 2 bis 6, **dadurch gekennzeichnet, dass** ein Anschlag (38) für den Schlaghebel (44) oder für den Querbolzen (52) vorgesehen ist.

8. Schneideinrichtung (10) nach Anspruch 7, **dadurch gekennzeichnet, dass** der Anschlag (38) elastisch nachgiebig ist.

9. Schneideinrichtung (10) nach Anspruch 7 oder 8, **dadurch gekennzeichnet, dass** der Anschlag (38) eine elastisch nachgiebige Anschlagfläche aufweist.

10. Schneideinrichtung (10) nach einem der Ansprüche 2 bis 9, **dadurch gekennzeichnet, dass** ein Rückholelement (48) zur Erzeugung einer vom Werkstück (74) weg gerichteten Bewegung des Schlaghebels (44) vorgesehen ist.

11. Schneideinrichtung (10) nach Anspruch 10, **dadurch gekennzeichnet, dass** das Rückholelement (48) ein Langloch (54) aufweist, welches vom Querbolzen (52) durchgriffen ist.

12. Schneideinrichtung (10) nach Anspruch 11, **dadurch gekennzeichnet, dass** der Schlaghebel (44) an der Trägerplatte (34) oder an mit der Trägerplatte zumindest mittelbar verbundenen Halteelementen (36, 42) schwenkbar angelenkt ist.

13. Schneideinrichtung (10) nach Anspruch 12, **dadurch gekennzeichnet, dass** der Stößel (46) bezogen auf die Längserstreckung des Schlaghebels (44) zwischen dessen Anlenkung (42) und dem Schneidelement (62) angeordnet ist.

14. Schneideinrichtung (10) nach einem der vorhergehenden Ansprüche, **dadurch gekennzeichnet, dass** die Hubplatte (32) relativ zur Trägerplatte (34) bewegbar und über Führungsmittel geführt ist.

15. Schneideinrichtung (10) nach einem der vorhergehenden Ansprüche, **dadurch gekennzeichnet, dass** die Antriebsmittel (20, 22, 24, 28, 32) einen Kurbeltrieb (22, 24) aufweisen.

16. Schneideinrichtung (10) nach einem der vorhergehenden Ansprüche, **dadurch gekennzeichnet, dass** eine Vorschubvorrichtung zum Nachführen des Werkstücks vorgesehen ist.

17. Schneideinrichtung (10) nach einem der vorhergehenden Ansprüche, **dadurch gekennzeichnet, dass** der Antrieb einen Energiespeicher aufweist.

18. Schneideinrichtung (10) nach Anspruch 17, **dadurch gekennzeichnet, dass** der Energiespeicher vom Antrieb vorspannbar oder aufladbar ist, und die gespeicherte Energie schlagartig an die Antriebsmittel (20, 22, 24, 28, 32) abgebbar ist.

19. Schneideinrichtung (10) nach einem der vorhergehenden Ansprüche, **dadurch gekennzeichnet, dass dadurch gekennzeichnet, dass** der Antrieb eine Feder oder einen Gasdruckspeicher aufweist.

20. Schneideinrichtung (10) nach einem der Ansprüche 2 bis 19, **dadurch gekennzeichnet, dass** der Schlaghebel (44) elastisch durchbiegbar bzw. verformbar ist.

21. Schneideinrichtung (10) nach einem der vorhergehenden Ansprüche, **dadurch gekennzeichnet, dass** es als Schnellwechselkassette ausgebildet ist.

22. Schneideinrichtung (10) nach einem der vorhergehenden Ansprüche, **dadurch gekennzeichnet, dass** die Schlagenergie einstellbar ist durch Hebellängenveränderung, durch Verschieben von Massen und/oder durch unterschiedliche Vorspannung von Federelementen.

23. Schneideinrichtung (10) nach Anspruch 22, **dadurch gekennzeichnet, dass** die Schlagenergie stufenlos oder in Stufen einstellbar ist.

## Claims

1. Cutting unit (10) for cutting a workpiece (74) using a movable cutting element (62) in the course of which the cutting element (62) is driveable through a drive via propulsion means (20, 22, 24, 28, 32) in order to perform a lifing movement and the propulsion means (20, 22, 24, 28, 32) reach a maximum elevating speed v₁, whereby means of transmission (44, 46) are provided, through which the cutting element (62) is movable with a maximum elevating speed v₂ > v₁, whereby the cutting unit (10) is designed as an accessory unit assigned for the installation into a pressing and cutting machine being customary in the trade, **characterised in that** the propulsion means (20, 22, 24, 28, 32) have a lifting plate (32) which can be connected with a ram block (28) of the pressing and cutting machine, whereby the cutting unit (10) has a carrier plate (34) which can be fixedly connected with a press bed of the pressing and cutting machine.

2. Cutting unit (10) according to claim 1, **characterised in that** the means of transmission (44, 46) comprise a striking lever (44).

3. Cutting unit (10) according to any of the preceding claims, **characterised in that** the means of transmission (44, 46) exhibit a pusher (46) for pushing the striking lever (44).

4. Cutting unit (10) according to claim 3, **characterised in that** the pusher (46) possesses a spring element.

5. Cutting unit (10) according to claim 3 or 4, **characterised in that** the striking lever (44) has a transversal pin (52) projecting on both sides.

6. Cutting unit (10) according to claim 5, **characterised in that** the pusher (46) pushes the transversal pin (52) for producing a movement of the striking lever (44) targeted at the workpiece (74).

7. Cutting unit (10) according to one of the claims 2 to 6, **characterised in that** a stopper (38) is provided for the striking lever (44) or for transversal pin (52).

8. Cutting unit (10) according to claim 7, **characterised in that** the stopper (38) is made elastically resilient.

9. Cutting unit (10) according to claim 7 or 8, **characterised in that** the stopper (38) is provided with an elastically resilient impact surface.

10. Cutting unit (10) according to one of the claims 2 to 9, **characterised in that** a fetching back element (48) is provided for producing of a movement of the striking lever (44) directed away from the workpiece.

11. Cutting unit (10) according to claim 10, **characterised in that** the fetching back element (48) has an elongated hole (54), which is passed through by the transversal pin (52).

12. Cutting unit (10) according to claim 11, **characterised in that** the striking lever (44) is pivotingly hinged at the carrier plate (34) or at mounting elements (36, 42) which are at least indirectly connected to the carrier plate.

13. Cutting unit (10) according to claim 12, **characterised in that** the pusher (46) is, relating to the longitudinal extension of the striking lever (44), arranged between the linkage (42) of the striking lever and the cutting element (62).

14. Cutting unit (10) according to any of the preceding claims, **characterised in that** the lifting plate (32) is movable with respect to the carrier plate (34) and is guided by means of guiding elements.

15. Cutting unit (10) according to any of the preceding claims, **characterised in that** the propulsion means (20, 22, 24, 28, 32) comprise a crank drive (22, 24).

16. Cutting unit (10) according to any of the preceding claims, **characterised in that** there is provided a feeder device for supplying the workpiece.

17. Cutting unit (10) according to any of the preceding claims, **characterised in that** the drive mechanism comprises an energy storage.

18. Cutting unit (10) according to claim 17, **characterised in that** the energy storage can be loaded or charged by the drive mechanism, and the stored energy can be imparted abruptly onto the propulsion means (20, 22, 24, 28, 32).

19. Cutting unit (10) according to any of the preceding claims, **characterised in that** the drive mechanism comprises a spring or a gas pressure storage.

20. Cutting unit (10) according to one of the claims 2 to 19, **characterised in that** the striking lever (44) is made elastically bendable or deformable.

21. Cutting unit (10) according to any of the preceding claims, **characterised in that** it is designed as a quickly exchangeable cartridge.

22. Cutting unit (10) according to any of the preceding claims, **characterised in that** the impact work is adjustable by an alteration of a lever arm length, by a relocation of mass elements and/or by a varying of the loading of a spring element.

23. Cutting unit (10) according to claim 22, **characterised in that** the impact work is adjustable continously or with switching steps.

## Revendications

1. Dispositif de coupe (10) destiné à couper une pièce (74) au moyen d'un élément de coupe mobile (62), dans lequel l'élément de coupe (62) peut être entraîné par un mécanisme d'entraînement par l'intermédiaire de moyens d'entraînement (20, 22, 24, 28, 32) afin d'exécuter un mouvement de levage, les moyens d'entraînement (20, 22, 24, 28, 32) pouvant atteindre une vitesse de levage maximale v₁, dans lequel sont prévus des moyens de transmission (44, 46), par l'intermédiaire desquels l'élément de coupe (62) peut être déplacé avec une vitesse de levage maximale v₂ > v₁ et en ce que le dispositif de coupe (10) est prévu en tant que module supplémentaire pour montage dans des machines à estamper et couper usuelles, **caractérisé en ce que** les moyens d'entraînement (20, 22, 24, 28, 32) comportent une plaque de levage (32) pouvant être raccordée fermement à un marteau à enfoncer (28) de la machine à estamper et couper dans lequel le dispositif de coupe (10) comporte une plaque de support (34) pouvant être raccordé fermement à une table de presse de la machine à estamper et couper.

2. Dispositif de coupe (10) selon revendication 1, **caractérisé en ce que** les moyens de transmission (44, 46) comportent un bras à battements (44).

3. Dispositif de coupe (10) selon l'une des revendications précédentes, **caractérisé en ce que** les moyens de transmission (44, 46) comportent un poussoir (46) pour entraîner le bras à battements (44).

4. Dispositif de coupe (10) selon revendication 3, **caractérisé en ce que** le poussoir (46) comporte un élément ressort.

5. Dispositif de coupe (10) selon revendication 3 ou 4, **caractérisé en ce que** le bras à battements (44) comporte une goupille transversale (52) débordant des deux côtés.

6. Dispositif de coupe (10) selon revendication 5, **caractérisé en ce** le poussoir (46) appuie sur la goupille transversale (52) afin de générer un mouvement du bras à battements (44) orienté vers la pièce (74).

7. Dispositif de coupe (10) selon l'une des revendications 2 à 6, **caractérisé en ce qu'**une butée (38) est prévue pour le bras à battements (44) ou la goupille transversale (52).

8. Dispositif de coupe (10) selon revendication 7, **caractérisé en ce que** la butée (38) est élastiquement flexible.

9. Dispositif de coupe (10) selon les revendications 7 ou 8, **caractérisé en ce que** la butée (38) dispose d'une surface à enfoncer élastiquement flexible.

10. Dispositif de coupe (10) selon l'une des revendications 2 à 9, **caractérisé en ce qu'** un élément de rappel (48) est prévu pour générer un mouvement du bras à battements (44) éloignant celui-ci de la pièce (74).

11. Dispositif de coupe (10) selon revendication 10, **caractérisé en ce que** l'élément de rappel (48) comporte un trou oblong (54) traversé par la goupille transversale (52).

12. Dispositif de coupe (10) selon revendication 11, **caractérisé en ce que** le bras à battements (44) est articulé pivotant sur la plaque de support (34) ou sur des éléments de fixation (36, 42) qui sont, au moins indirectement, liés à la plaque de support.

13. Dispositif de coupe (10) selon revendication 12, **caractérisé en ce que** le poussoir (46) est, par rapport à l'étendue longitudinale du bras à battements (44), disposé entre l'articulation de celui-ci (42) et l'élément de coupe (62).

14. Dispositif de coupe (10) selon l'une des revendications précédentes, **caractérisé en ce que** la plaque de levage (32) peut être déplacée par rapport à la plaque de support (34) et est guidée par des éléments de guidage.

15. Dispositif de coupe (10) selon l'une des revendications précédentes, **caractérisé en ce que** les moyens d'entraînement (20, 22, 24, 28, 32) comportent un mécanisme d'embiellage (22, 24).

16. Dispositif de coupe (10) selon l'une des revendications précédentes, **caractérisé en ce qu'**un dispositif d'avance est prévu pour amener la pièce.

17. Dispositif de coupe (10) selon l'une des revendications précédentes, **caractérisé en ce que** le mécanisme d'entraînement comporte un accumulateur d'énergie.

18. Dispositif de coupe (10) selon revendication 17, **caractérisé en ce que** l'accumulateur d'énergie peut être tendu ou chargé par le mécanisme d'entraînement et que l'énergie accumulée peut être transférée d'un coup aux moyens d'entraînement (20, 22, 24, 28, 32).

19. Dispositif de coupe (10) selon l'une des revendications précédentes, **caractérisé en ce que** le mécanisme d'entraînement comporte un ressort ou un accumulateur-pneumatique.

20. Dispositif de coupe (10) selon l'une des revendications 2 à 19, **caractérisé en ce que** le bras à battements (44) est fléchissable ou déformable élastiquement.

21. Dispositif de coupe (10) selon l'une des revendications précédentes, **caractérisé en ce qu'**il est conçu sous forme d'une cassette à changement rapide.

22. Dispositif de coupe (10) selon l'une des revendications précédentes, **caractérisé en ce que** l'énergie de frappe peut être réglée par modification de la longueur du bras à battements, par le déplacement de masses et/ou par des tensions différentes d'éléments ressort.

23. Dispositif de coupe (10) selon revendication 22, **caractérisé en ce que** l'énergie de frappe peut être réglée en continu ou par paliers.
